# EUROPÄISCHE PATENTSCHRIFT

(11) **EP 1 837 221 B1**
(45) Veröffentlichungstag und Bekanntmachung des Hinweises auf die Patenterteilung: **18.09.2013**
(21) Anmeldenummer: 07004716.2
(22) Anmeldetag: 07.03.2007
(51) Int. Cl.: B60J 7/12, B60J 10/10

(54) **Faltverdeck für ein Kraftfahrzeug**
Folding cover for a motor vehicle
Toit escamotable pour un véhicule automobile

(30) Priorität: 20.03.2006 DE 102006012652
(43) Veröffentlichungstag der Anmeldung: 26.09.2007
(73) Patentinhaber: Webasto AG, 82131 Stockdorf (DE)
(72) Erfinder: Dietl, Rudolf, 81247 München (DE)

(56) Entgegenhaltungen:
- DE-A1- 10 051 436

## Beschreibung

Die vorliegende Erfindung betrifft ein Faltverdeck für ein Kraftfahrzeug, mit einem eine Hauptsäule und einen Hauptlenker aufweisenden Verdeckgestänge, wobei die Hauptsäule und der Hauptlenker über jeweils einen ersten Gelenkpunkt an einem karosseriefesten Hauptlager des Fahrzeugs gelagert sind und über jeweils einen zweiten Gelenkpunkt mittels eines Dachrahmenelements gelenkig miteinander verbunden sind, und einem Dichtungsträger, der mit der Hauptsäule oder dem Hauptlenker gelenkig so verbunden ist, dass eine Relativbewegung gegenüber der Hauptsäule und dem Hauptlenker ermöglicht wird.

Eine wichtige Aufgabe bei der Konstruktion von Faltverdecken besteht in der Platz sparenden Unterbringung des abgelegten Verdecks. Insbesondere ist man bestrebt, die an dem Verdeckgestänge angebrachten Dichtungsträger beim Ablegen des Verdecks in eine Platz sparende Position zu verschwenken. Die vorliegende Erfindung befasst sich diesbezüglich mit der an der C-Säule des Faltverdecks angeordneten Dichtung, die im geschlossenen Zustand des Verdecks eine abdichtende Funktion zur hinteren Seitenscheibe des Fahrzeugs zur Verfügung stellt.

In der DE 100 51 436 A1 wird bereits eine nützliche Möglichkeit zur Platz sparenden Unterbringung der hinteren Dichtung beschrieben. Dabei ist der Dichtungsträger gelenkig mit der Hauptsäule verbunden, und er wird ferner über eine gelenkig am karosseriefesten Hauptlager befestigten Koppelstange angelenkt. Dies hat zur Folge, dass beim Verschwenken der Hauptsäule nach hinten über die Koppelstange eine Kraft auf den Dichtungsträger ausgeübt wird, die diesen im abgelegten Zustand des Verdecks in eine Platz sparende Position bringt. Die Dichtung führt jedoch lediglich eine Rotationsbewegung um die Längskante des Dachteils aus, an dem sie gelagert ist. Jedoch kann es für eine platzsparende Unterbringung des Faltverdecks erforderlich sein, den Dichtungsträger in der Querrichtung des Faltverdecks bzw. in der Querrichtung des Kraftfahrzeugs zu bewegen.

Der Erfindung liegt somit die Aufgabe zugrunde, die geschilderten Systeme des Standes der Technik derart zu verbessern, dass das Faltverdeck eine Bewegungsmechanik für einen Dichtungsträger bereitstellt, die möglichst flexible Bewegungen zulässt und einfach zu realisieren ist.

Diese Aufgabe wird mit einem Faltverdeck für ein Kraftfahrzeug gemäß Anspruch 1 und einem Kraftfahrzeug gemäß Anspruch 11 gelöst.

Vorteilhafte Ausführungsformen der Erfindung sind Gegenstand der abhängigen Ansprüche.

Das erfindungsgemäße Faltverdeck für ein Kraftfahrzeug baut auf dem gattungsgemäßen Stand der Technik dadurch auf, dass der Dichtungsträger des Weiteren gelenkig mit dem Dachrahmenelement verbunden ist. Dieser Aufbau ist die Grundlage, um ein Faltverdeck zu realisieren, welches toleranzunempfindlicher ist, weil die Krafteinleitung über das Dachrahmenelement einen Aufbau mit größeren Hebelwegen ermöglicht als bekannte Bewegungsmechaniken für den Dichtungsträger. Außerdem hat dieser Aufbau den großen Vorteil, dass auf 3D-Gelenke bzw. Kugelgelenke verzichtet werden kann, die den Aufbau deutlich verteuern. Des Weiteren ist dieses Faltverdeck fertigungs- und montagetechnisch günstig. Durch die flexible Gestaltungsmöglichkeit der Abmessungsverhältniase lassen sich bei diesem Aufbau 3D-Lagen mit breitem Spielraum realisieren. Außerdem kann dieser Aufbau so gestaltet werden, dass es zu einer sehr günstigen Krafteinleitung führt. Mittels der Abmessungsverhältnisse der einzelnen gelenkig koppelnden Bauteile lassen sich auch Einstellungen gegenüber dem Fahrzeugrohbau realisieren.

Das erfindungsgemäße Faltverdeck kann in vorteilhafter Weise dadurch weitergebildet sein, dass der Dichtungsträger mittels einem Dichtungsträgerlenker über zwei Gelenke mit dem Dachrahmenelement gekoppelt ist, und mittels einem weiteren Dichtungsträgerlenker über zwei weitere Gelenke mit der Hauptsäule oder dem Hauptlenker gekoppelt ist. Somit ist eine einfach zu realisierende Umsetzung des Faltverdecks geschaffen, welche die vorstehend beschriebenen Vorteile bietet.

Bei einer bevorzugten Ausführungsform des erfindungsgemäßen Faltverdecks ist weiterhin vorgesehen, dass die Gelenke Drehgelenke sind, welche jeweils nur eine zweidimensional gelenkige Verbindung zulassen. Durch die Ausbildung der Bewegungsmechanik für den Dichtungsträger mittels Drehgelenken kann ein kostengünstiger Aufbau realisiert werden, da die ansonsten erforderlichen Kugelgelenke kostspieliger sind.

Darüber hinaus kann das erfindungsgemäße Faltverdeck derart weitergebildet sein, dass eine Drehachse von mindestens zwei Gelenken jeweils im Wesentlichen in der gleichen Ebene liegt, wie eine Kurve, welche bei Verschwenkung eines aus Hauptsäule und Hauptlenker gebildeten Viergelenks von einem Punkt der zugehörigen Drehachse der Gelenke beschrieben wird. Durch diese Weiterbildung ist die Bewegung des Dichtungsträgers in Querrichtung des Faltverdecks bzw. in Querrichtung des Kraftfahrzeugs einstellbar.

Des Weiteren kann das erfindungsgemäße Faltverdeck so weitergebildet sein, dass eine Drehachse von drei Gelenken jeweils im Wesentlichen in der gleichen Ebene liegt, wie eine Kurve, welche bei Verschwenkung eines aus Hauptsäule und Hauptlenker gebildeten Viergelenks von einem Punkt der zugehörigen Drehachse der Gelenke beschrieben wird. Dieser Aufbau führt zu einer besonders günstigen Krafteinleitung.

Außerdem kann das erfindungsgemäße Faltverdeck so weitergebildet sein, dass die zwei zum Hauptlager nächstgelegenen Gelenke im Wesentlichen parallele Drehachsen aufweisen. Auch dieser Aufbau führt zu einer verbesserten Krafteinleitung und somit zur vermeidung einer übermäßigen Materialbeanspruchung des Verdeckgestänges.

Weiterhin kann das erfindungsgemäße Faltverdeck so ausgebildet sein, dass das Gelenk, welches einen der Dichtungsträgerlenker mit dem Dachrahmenelement (44) verbindet, eine Drehachse aufweist, die zu den im Wesentlichen parallelen Drehachsen im Wesentlichen senkrecht ist. Durch diese Geometrieverhältnisse können 3D-Bewegungen unter Vermeidung von Kugelgelenken mit günstiger Krafteinleitung realisiert werden.

Das erfindungsgemäße Faltverdeck baut auf dem gattungsgemäßen Stand der Technik dadurch auf, dass das weiter vom Hauptlager entfernte Gelenk der Gelenke, welche den Dichtungsträger mit den Dichtungsträgerlenkern verbinden, eine Drehachse aufweist, welche zu den im Wesentlichen parallelen Drehachsen maximal einen Winkel von 55° aufspannt. Bis zu einem Winkel von maximal 55° kann der Aufbau ohne Verwendung von Kugelgelenken realisiert werden, ohne dass übermäßig hohe Kräfte auf das Verdeckgestänge wirken.

Darüber hinaus kann das erfindungsgemäße Faltverdeck derart weitergebildet sein, dass mindestens die Drehachsen der zwei zum Hauptlager nächstgelegenen Gelenke im Wesentlichen senkrecht zur Hauptsäule oder zum Hauptlenker sind. Durch einen derartigen Aufbau kann die Bewegungsmechanik für den Dichtungsträger derart ausgebildet werden, dass diese bezogen auf die Fahrzeugslängsachse vor oder hinter der Hauptsäule bzw. dem Hauptlenker vorbeigeführt wird und somit zu einer Platz sparenden Anordnung im zusammengeklappten Zustand des Faltverdecks in der vertikalen Richtung führt.

Weiterhin kann das erfindungsgemäße Faltverdeck so ausgebildet werden, dass von den Gelenken des weiter vom Hauptlager entfernten Dichtungsträgerlenkers eines eine Schwenkbewegung des Dichtungsträgers in einer Querrichtung des Faltverdecks ermöglicht. Dadurch kann der Dichtungsträger seitwärts bewegt werden, so dass er im abgelegten Zustand in einer Ebene mit anderen Dichtungsträgern des Faltverdecks zum Liegen kommt und so ein besonders Platz sparendes, zusammengefaltetes Faltverdeck liefert.

Die Erfindung betrifft weiterhin ein Kraftfahrzeug mit einem erfindungsgemäßen Faltverdeck, wobei das Kraftfahrzeug die vorstehend beschriebenen Vorteile in übertragener Weise bietet.

Eine bevorzugte Ausführungsform der Erfindung wird nachfolgend anhand der Figuren beispielhaft erläutert.

Es zeigen:
- Figur 1: eine Seitenansicht eines Kraftfahrzeugs mit dem erfindungsgemäßen Faltverdeck im geschlossenen Zustand;
- Figur 2: eine perspektivische Darstellung eines erfindungsgemäßen Faltverdecks im geschlossenen zustand;
- Figur 3: einen Ausschnitt I aus Figur 2;
- Figur 4: einen Ausschnitt II aus Figur 2;
- Figur 5: eine perspektivische Darstellung eines Faltverdecks gemäß Figur 2 in einer Zwischenstellung zwischen geschlossenem und abgelegtem Zustand;
- Figur 6: eine perspektivische Darstellung des Faltverdecks gemäß Figur 2 im abgelegten Zustand; und
- Figur 7: den abgelegten Zustand des Faltverdecks aus Figur 6 aus der in Figur 6 gekennzeichneten Richtung III betrachtet.

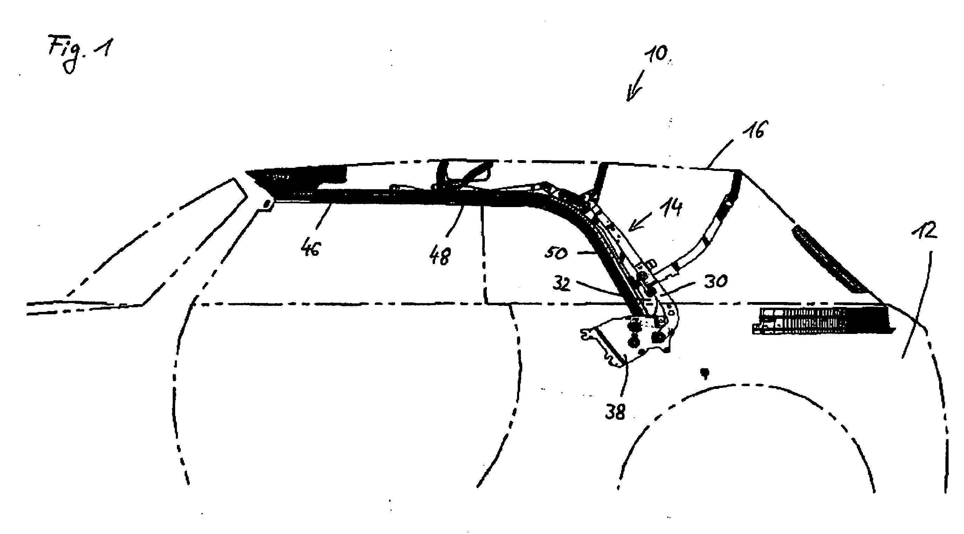

Figur 1 zeigt eine Seitenansicht eines Kraftfahrzeugs mit dem erfindungsgemäßen Faltverdeck im geschlossenen Zustand. Das Faltverdeck 10 eines Kraftfahrzeugs 12 weist ein Verdeckgestänge 14 und einen vom Verdeckgestänge 14 gehaltenen und abgestützten Verdeckstoff 16 auf. Das Verdeckgestänge 14 ist symmetrisch zu einer vertikalen Fahrzeuglängsmittelebene aufgebaut. Die im Folgenden verwendete Richtungsangabe "Längsrichtung des Faltverdecks" entspricht der Rechts-Links-Richtung in Figur 1, und die Richtungsangabe "Querrichtung des Faltverdecks" entspricht der Betrachtungsrichtung der Figur 1.

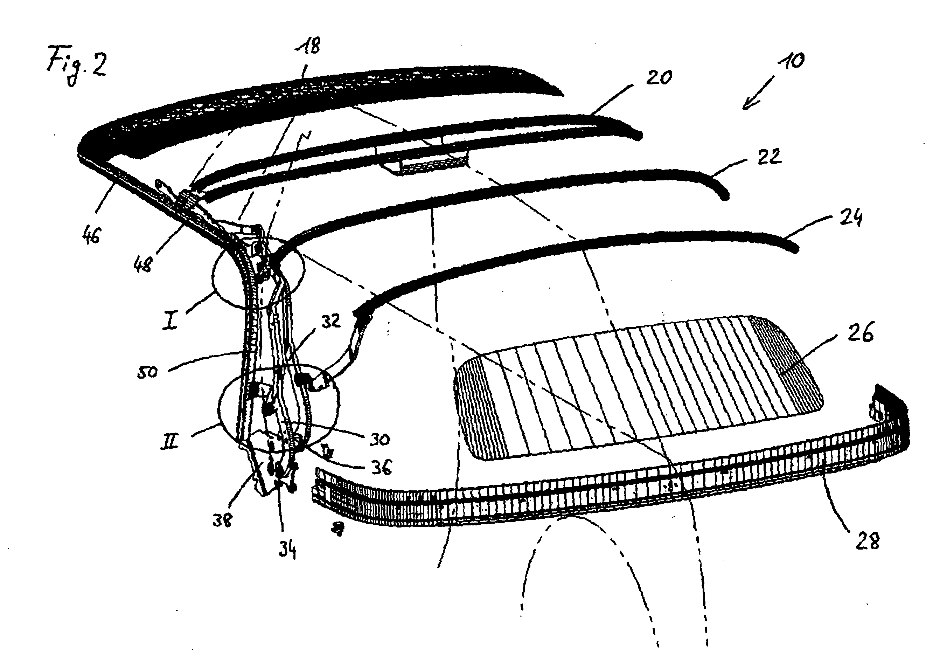

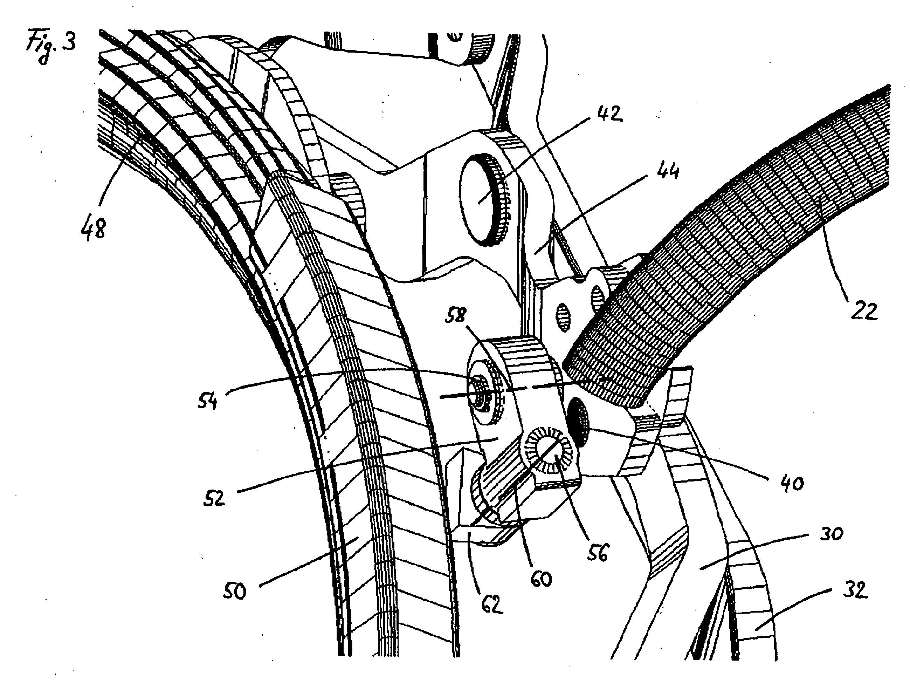

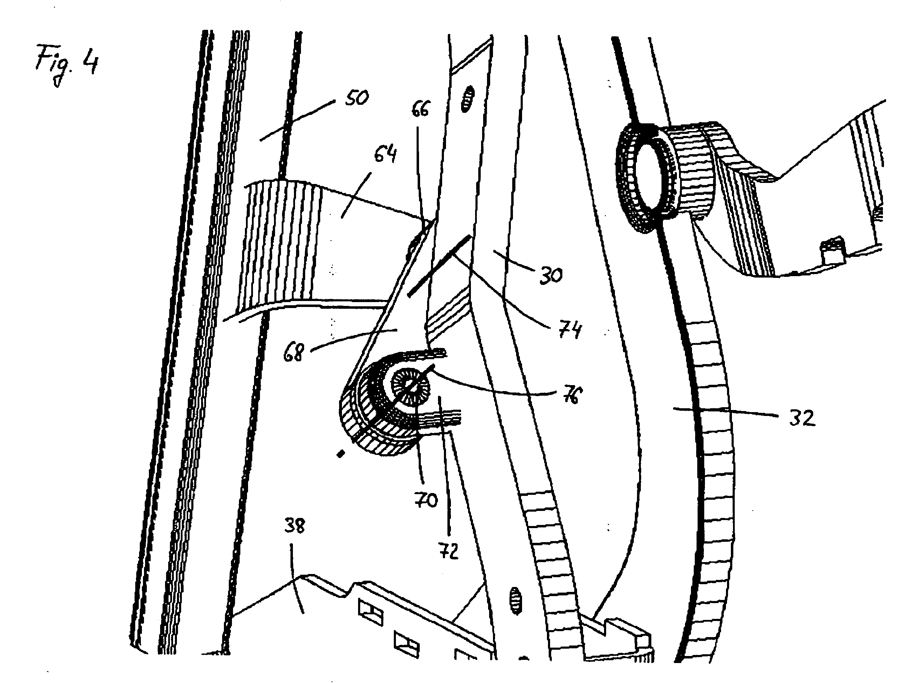

Figur 2 zeigt eine perspektivische Darstellung eines erfindungsgemäßen Faltverdecks im geschlossenen Zustand. Dieses Faltverdeck ist in den Figuren 3 und 4 im Detail dargestellt, wobei Figur 3 einen Ausschnitt I und Figur 4 einen Ausschnitt II aus Figur 2 darstellt. Das Faltverdeck 10 umfasst, in Fahrtrichtung von vorne nach hinten, einen Frontspriegel 18, eine Dachkassette 20, einen Hauptspriegel 22 sowie einen Eckspriegel 24. Im hinteren Bereich des Faltverdecks 10 sind weiterhin eine Heckscheibe 26 und ein Spannbügel 28 angeordnet. Die Spriegel 18, 22, 24 und die Dachkassette 20 bilden quer zur Fahrtrichtung verlaufende Elemente des Verdeckgestänges 14, die seitlich mit Seitenteilen des Verdeckgestänges 14 verbunden sind. Im Zusammenhang mit der vorliegenden Erfindung interessieren besonders die hinteren seitlichen Elemente des Verdeckgestänges 14. Dies sind insbesondere eine Hauptsäule 30 und ein Hauptlenker 32, die über Gelenkpunkte 34, 36 mit einem karosseriefesten Hauptlager 38 gelenkig verbunden sind. An ihren anderen Endbereichen sind die Hauptsäule 30 und der Hauptlenker 32 über Gelenkpunkte 40, 42 mittels eines Dachrahmenelementes 44 gelenkig miteinander verbunden und bilden somit ein Viergelenk aus. Die Gelenkpunkte 34, 36, 40 und 42 werden vorzugsweise mittels Drehgelenken ausgebildet. An den Hauptlenker 32 schließen sich die weiteren mittleren und vorderen seitlichen Elemente des Verdeckgestänges 14 an. An diesen vorderen und mittleren seitlichen Elementen des Verdeckgestänges 14 sind ein vorderer Dichtungsträger 46 und ein mittlerer Dichtungsträger 48 befestigt. Mit der Hauptsäule 30 bildet ein hinterer Dichtungsträger 50 eine Bewegungsmechanik für den Dichtungsträger 50 aus. Die Dichtungsträger 46 - 50 tragen jeweils eine Dichtung, die vorzugsweise aus einem Gummimaterial besteht, um die Seitenfenster des Kraftfahrzeugs 12 bei geschlossenen Seitenfenstern und geschlossenem Faltverdeck 10 abzudichten. Die Dichtungen sind dabei jeweils an den Dichtungsträgern 46 - 50 befestigt oder einstückig mit diesen ausgebildet. Der Dichtungsträger 50 ist an einem oberen Abschnitt wie in Figur 3 dargestellt, mittels eines Dichtungsträgerlenkers 52 über das Dachrahmenelement 44 an die Hauptsäule 30 und den Hauptlenker 32 gekoppelt. Der Dichtungsträgerlenker 52 ist ein Verbindungsstück, welches vorzugsweise aus Metall ist. Der Dichtungsträgerlenker 52 weist an einem Endabschnitt ein Drehgelenk 54 auf, wodurch der Dichtungsträgerlenker 52 mit dem Dachrahmenelement 44 gelenkig verbunden ist. Am anderen Endabschnitt des Dichtungsträgerlenkers 52 ist ein Drehgelenk 56 vorgesehen, um den hinteren Dichtungsträger 50 mit dem Dichtungsträgerlenker 52 gelenkig zu verbinden. Die jeweiligen Drehachsen 58 und 60 der Drehgelenke 54 und 56 stehen vorzugsweise senkrecht zueinander. Genauer ist das Drehgelenk 56 am hinteren Dichtungsträger 50 mittels eines vom Dichtungsträger 50 zungenförmig abstehenden Befestigungsflansches 62 befestigt. An einem unteren Endbereich des hinteren Dichtungsträgers 50 ist dieser gelenkig mit der Hauptsäule 30 verbunden. Für diese Verbindung erstreckt sich ein zungenförmiger Befestigungsflansch 64 in der Querrichtung des Faltverdecks 10 in Richtung zur Mitte des Faltverdecks 10 vorbei am der Hauptsäule 30. Der dem hinteren Dichtungsträger 50 abgewandte Endbereich des Befestigungsflansches 64 ist mit einem Drehgelenk 66 versehen, um eine gelenkige Verbindung mit einem Dichtungsträgerlenker 68 herzustellen. Dieser Dichtungsträgerlenker 68 ist ein flaches längliches Verbindungsstück, welches vorzugsweise aus Metall besteht und an einem Endabschnitt mit dem Befestigungsflansch 64 gelenkig verbunden ist. Am anderen Endabschnitt ist der Dichtungsträgerlenker 68 über ein Drehgelenk 70 mit der Hauptsäule 30 gelenkig verbunden. Genauer ausgedrückt greift das Drehgelenk 70 an der Hauptsäule 30 an einem zungenförmigen Befestigungsflansch 72 an, der sich in die entgegengesetzte Querrichtung des Faltverdecks 10 wie der Befestigungsflansch 64 erstreckt. Die Drehachsen 74 und 76 der jeweiligen Drehgelenke 66 und 70 sind vorzugsweise parallel und vorzugsweise ist ebenso die Drehachse 60 des Drehgelenkes 56 parallel zu den Drehachsen 74 und 76, jedoch ist die vorliegende Erfindung bis zu einem maximalen Winkel von 55° zwischen den parallelen Drehachsen 74, 76 und der Drehachse 60 realisierbar, ohne dass Kugelgelenke erforderlich sind. Die Gelenke 54, 56, 66 und 70 sind als Buchsen ausführbar, in denen jeweils ein Bolzen geführt wird.

Beim nach hinten Verschwenken des Faltdaches 10 wird durch eine Relativbewegung der Hauptsäule 30 und des Hauptlenkers 32 das Dachrahmenelement 44 über die Drehgelenke 40 und 42 gedreht. Dadurch ändert sich die Distanz zwischen Drehachse 58 und Drehachse 76, so dass dies zu einer Bewegung des hinteren Dichtungsträgers 50 führt. Über das Gelenk 54 wird somit die Kraft eingeleitet, die den Dichtungsträger 50 innerhalb einer Ebene bewegt, die senkrecht zu den Drehachsen 60, 74 und 76 ist. Die Drehachse 58 ist demnach die antreibende Achse der Bewegungsmechanik für den Dichtungsträger 50. Durch gezielte Festlegung der Abmessungen der Befestigungsflansche 62, 64, 72 und der Abmessungen der Dichtungsträgerlenker 52 und 68 kann die Bewegung des hinteren Dichtungsträgers 50 in gewünschter Weise eingestellt werden. In der bevorzugten Ausführungsform führt die eben erwähnte Distanzveränderung zwischen Drehachse 58 und Drehachse 76 zu einer Schwenkbewegung des hinteren Dichtungsträgers 50 nach außen, also weg von der Hauptsäule 30. Dabei schwenkt der Dichtungsträger 50 vor allem um die Drehachse 60. Eine Kippbewegung des Dichtungsträgers 50 ist dabei vernachlässigbar.

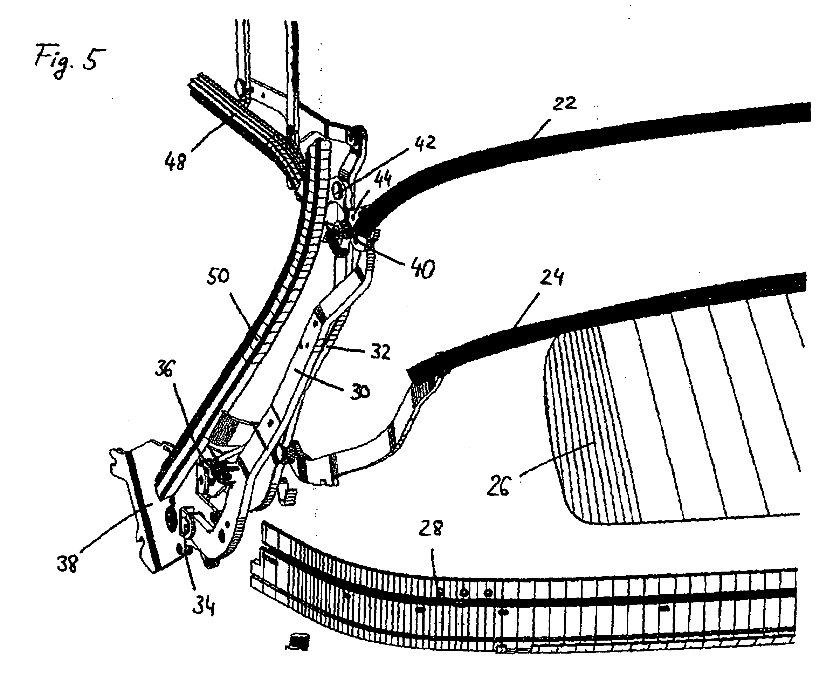

Figur 5 zeigt eine perspektivische Darstellung eines Faltverdecks 10 gemäß Figur 2 in einer Zwischenstellung zwischen geschlossenem und abgelegtem Zustand. Zum Ablegen des Faltverdecks 10 werden über einen (nicht dargestellten) Antrieb die Hauptsäule 30 und der Hauptlenker 32 nach hinten verschwenkt, wobei aufgrund der viergelenkartigen Anordnung verschiedene parallelogrammartige Zwischenzustände nacheinander eingenommen werden.

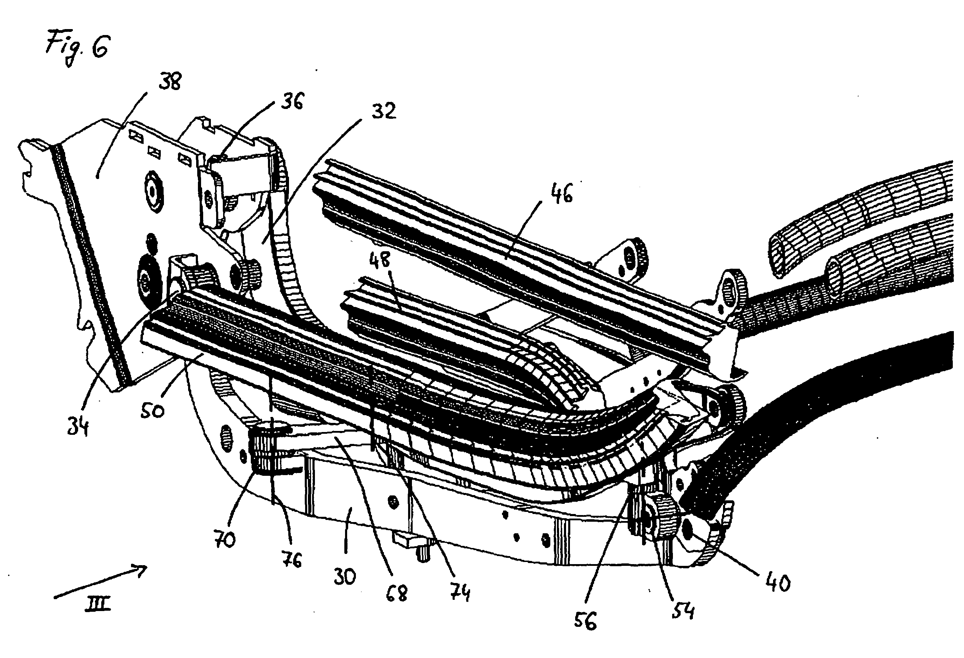

Figur 6 zeigt eine perspektivische Darstellung des Faltverdecks gemäß Figur 2 im abgelegten Zustand.

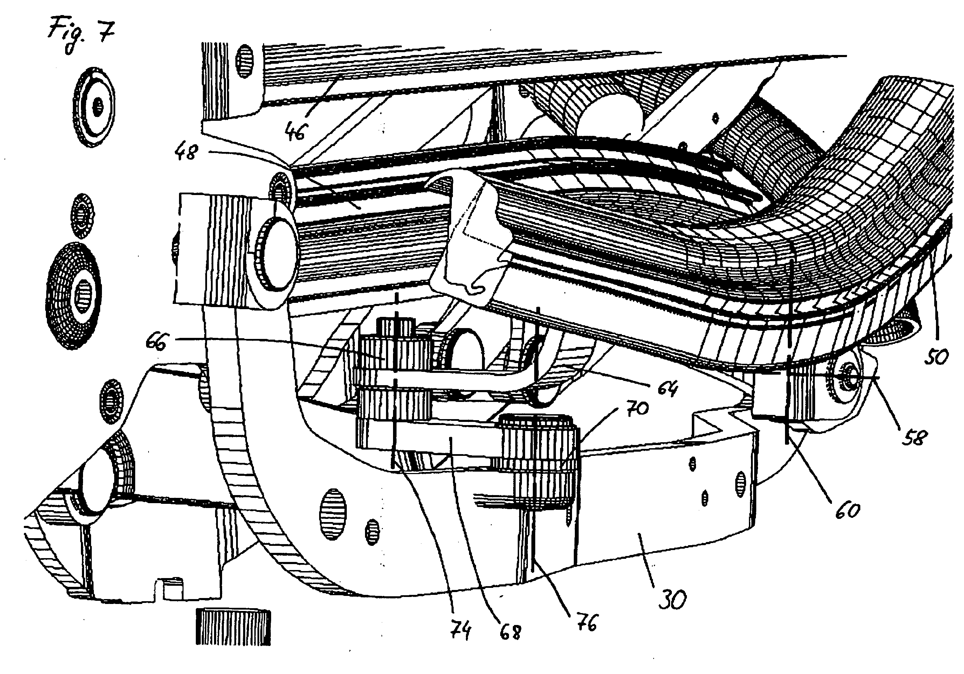

Figur 7 zeigt den abgelegten Zustand des Faltverdecks aus Figur 6 aus der in Figur 6 gekennzeichneten Richtung III betrachtet. Im abgelegten Zustand des Faltverdecks 10 liegen der Dichtungsträger 50 und damit in der Praxis auch die von diesem getragene Dichtung zumindest teilweise neben dem vorderen und hinteren Dichtungsträger 46 und 48. Auf diese Weise bleibt die Bauhöhe des abgelegten Faltverdecks 10 gering. Den Hub, der den Dichtungsträger 50 in seine Ablageposition bringt, wird aus der Relativbewegung zwischen der Hauptsäule 30 und dem Hauptlenker 32 bezogen, wobei aufgrund der günstigen Kraftübertragungswinkel vergleichsweise geringe Kräfte ausreichen, um die vorteilhafte Ablageposition des Dichtungsträgers 50 herbeizuführen.

In der vorliegenden Beschreibung und den Ansprüchen bedeutet die Verwendung von "im Wesentlichen", dass eine kleine Variation möglich ist, solange diese Variation nicht zu einer deutlich erhöhten Materialbelastung oder zu Verspannungen des Verdeckgestänges 14 führen.

### Bezugszeichenliste:

- 10: Faltverdeck
- 12: Kraftfahrzeug
- 14: Verdeckgestänge
- 16: Verdeckstoff
- 18: Frontspiegel
- 20: Dachkassette
- 22: Hauptspiegel
- 24: Eckspiegel
- 26: Heckscheibe
- 28: Spannbügel
- 30: Hauptsäule
- 32: Hauptlenker
- 34: Gelenkpunkt
- 36: Gelenkpunkt
- 38: Hauptlager
- 40: Gelenkpunkt
- 42: Gelenkpunkt
- 44: Dachrahmenelement
- 46: vorderer Dichtungsträger
- 48: mittlerer Dichtungsträger
- 50: hinterer Dichtungsträger
- 52: Dichtungsträgerlenker
- 54: Gelenk
- 56: Gelenk
- 58: Drehachse
- 60: Drehachse
- 62: Befestigungsflansch
- 64: Befestigungsflansch
- 66: Gelenk
- 68: Dichtungsträgerlenker
- 70: Gelenk
- 72: Befestigungsflansch
- 74: Drehachse
- 76: Drehachse

## Patentansprüche

1. Faltverdeck für ein Kraftfahrzeug, mit einem eine Hauptsäule (30) und einen Hauptlenker (32) aufweisenden Verdeckgestänge (14), wobei die Hauptsäule (30) und der Hauptlenker (32) über jeweils einen ersten Gelenkpunkt (34, 36) an einem karosseriefesten Hauptlager (38) des Fahrzeugs gelagert sind und über jeweils einen zweiten Gelenkpunkt (40, 42) mittels eines Dachrahmenelements (44) gelenkig miteinander verbunden sind, und einem Dichtungsträger (50), der mit der Hauptsäule (30) oder dem Hauptlenker (32) gelenkig (66, 70) so verbunden ist, dass eine Relativbewegung gegenüber der Hauptsäule (30) und dem Hauptlenker (32) ermöglicht wird, **dadurch gekennzeichnet, dass** der Dichtungsträger (50) des Weiteren gelenkig (54, 56) mit dem Dachrahmenelement (44) verbunden ist.

2. Faltverdeck gemäß Anspruch 1, **dadurch gekennzeichnet, dass** der Dichtungsträger (50) mittels einem Dichtungsträgerlenker (52) über zwei Gelenke (54, 56) mit dem Dachrahmenelement (44) gekoppelt ist, und mittels einem weiteren Dichtungsträgerlenker (68) über zwei weitere Gelenke (66, 70) mit der Hauptsäule (30) oder dem Hauptlenker (32) gekoppelt ist.

3. Faltverdeck gemäß Anspruch 2, dadurch gekenntzeichnet, dass die Gelenke (54, 56, 66, 70) Drehgelenke sind, welche jeweils nur eine zweidimensional gelenkige Verbindung zulassen.

4. Faltverdeck gemäß Anspruch 3, **dadurch gekennzeichnet, dass** eine Drehachse (74, 76) von mindestens zwei Gelenken (66, 70) jeweils im Wesentlichen in der gleichen Ebene liegt, wie eine Kurve, welche bei verschwenkung eines aus Hauptsäule (30) und Hauptlenker (32) gebildeten Viergelenks von einem Punkt der zugehörigen Drehachse (74, 76) der Gelenke (66, 70) beschrieben wird.

5. Faltverdeck gemäß Anspruch 3, **dadurch gekennzeichnet, dass** eine Drehachse (60, 74, 76) von drei Gelenken (56, 66, 70) jeweils im Wesentlichen in der gleichen Ebene liegt, wie eine Kurve, welche bei Verschwenkung eines aus Hauptsäule (30) und Hauptlenker (32) gebildeten Viergelenks von einem Punkt der zugehörigen Drehachse (60, 74, 76) der Gelenke (56, 66, 70) beschrieben wird.

6. Faltverdeck gemäß einem der Ansprüche 3 bis 5, **dadurch gekennzeichnet, dass** die zwei zum Hauptlager (38) nächstgelegenen Gelenke (66, 70) im Wesentlichen parallele Drehachsen aufweisen.

7. Faltverdeck gemäß Anspruch 6, **dadurch gekennzeichnet, dass** das Gelenk (54), welches einen der Dichtungsträgerlenker (52) mit dem Dachrahmenelement (44) verbindet, eine Drehachse (58) aufweist, die zu den im Wesentlichen parallelen Drehachsen (74, 76) im Wesentlichen senkrecht ist.

8. Faltverdeck gemäß Anspruch 6, **dadurch gekennzeichnet, dass** das weiter vom Hauptlager (38) entfernte Gelenk (56) der Gelenke (56, 66), welche den Dichtungsträger (50) mit den Dichtungsträgerlenkern (52, 68) verbinden, eine Drehachse (60) aufweist, welche zu den im Wesentlichen parallelen Drehachsen (74, 76) maximal einen Winkel von 55° aufspannt.

9. Faltverdeck gemäß einem der Ansprüche 3 bis 8, **dadurch gekennzeichnet, dass** mindestens die Drehachsen (74, 76) der zwei zum Hauptlager (38) nächstgelegenen Gelenke (66, 70) im Wesentlichen senkrecht zur Hauptsäule (30) oder zum Hauptlenker (32) sind.

10. Faltverdeck gemäß einem der Ansprüche 2 bis 9, **dadurch gekennzeichnet, dass** von den Gelenken (54, 56) des weiter von Hauptlager (38) entfernten Dichtungsträgerlenkers (52) eines (56) eine Schenkbewegung des Dichtungsträgers (50) in einer Querrichtung des Faltverdecks ermöglicht.

11. Kraftfahrzeug mit einem Faltverdeck gemäß einem der vorhergehenden Ansprüche.

## Claims

1. Folding top for a motor vehicle, with a top linkage (14) which has a main pillar (30) and a main link (32), wherein the main pillar (30) and the main link (32) are mounted via a respective first hinge point (34, 36) on a body-mounted main bearing (38) of the vehicle and are connected to each other in an articulated manner by means of a roof frame element (44) via a respective second hinge point (40, 42), and a seal carrier (50) which is connected in an articulated manner (66, 70) to the main pillar (30) or to the main link (32) such that the main pillar (30) and the main link (32) can move relative to each other, **characterized in that** the seal carrier (50) is furthermore connected in an articulated manner (54, 56) to the roof frame element (44).

2. Folding top according to Claim 1, **characterized in that** the seal carrier (50) is coupled to the roof frame element (44) by means of a seal carrier link (52) via two hinges (54, 56), and is coupled to the main pillar (30) or to the main link (32) by means of a further seal carrier link (68) via two further hinges (66, 70).

3. Folding top according to Claim 2, **characterized in that** the hinges (54, 56, 66, 70) are rotary hinges which in each case permit only a two-dimensionally articulated connection.

4. Folding top according to Claim 3, **characterized in that** an axis of rotation (74, 76) of at least two hinges (66, 70) in each case lies substantially in the same plane as a curve which is described by a point of the associated axis of rotation (74, 76) of the hinges (66, 70) during pivoting of a four-bar linkage formed from the main pillar (30) and the main link (32).

5. Folding top according to Claim 3, **characterized in that** an axis of rotation (60, 74, 76) of three hinges (56, 66, 70) in each case lies substantially in the same plane as a curve which is described by a point of the associated axis of rotation (60, 74, 76) of the hinges (56, 66, 70) during pivoting of a four-bar linkage formed from the main pillar (30) and the main link (32).

6. Folding top according to one of Claims 3 to 5, **characterized in that** the two hinges (66, 70) located closest to the main bearing (38) have axes of rotation which are substantially parallel.

7. Folding top according to Claim 6, **characterized in that** the hinge (54) which connects one of the seal carrier links (52) to the roof frame element (44) has an axis of rotation (58) which is substantially perpendicular to the axes of rotation (74, 76) which are substantially parallel.

8. Folding top according to Claim 6, **characterized in that** the hinge (56), which is further away from the main bearing (38), of the hinges (56, 66) which connect the seal carrier (50) to the seal carrier links (52, 68) has an axis of rotation (60) which spans at maximum an angle of 55° with respect to the axes of rotation (74, 76) which are substantially parallel.

9. Folding top according to one of Claims 3 to 8, **characterized in that** at least the axes of rotation (74, 76) of the two hinges (66, 70) located closest to the main bearing (38) are substantially perpendicular to the main pillar (30) or to the main link (32).

10. Folding top according to one of Claims 2 to 9, **characterized in that** of the hinges (54, 56) of the seal carrier link (52) further away from the main bearing (38), one hinge (56) permits a pivoting movement of the seal carrier (50) in a transverse direction of the folding top.

11. Motor vehicle with a folding top according to one of the preceding claims.

## Revendications

1. Toit escamotable pliable pour un véhicule automobile, avec une tige escamotable (14) comprenant un montant principal (30) et un bras oscillant principal (32), le montant principal (30) et le bras oscillant principal (32) étant disposés respectivement au niveau d'un palier de roulement principal (38) du véhicule fixé à la carrosserie par le biais d'un premier point d'articulation (34, 36) et étant reliés de façon articulée l'un à l'autre à l'aide d'un élément de cadre de toit (44) par le biais respectivement d'un deuxième point d'articulation (40, 42) et avec un support de joint (50) relié de façon articulée (66, 70) au montant principal (30) ou au bras oscillant principal (32) de façon à permettre un mouvement relatif par rapport au montant principal (30) et au bras oscillant principal (32), **caractérisé en ce que** le support de joint (50) est en outre relié de façon articulée (54, 56) à l'élément de cadre de toit (44).

2. Toit escamotable pliable selon la revendication 1, **caractérisé en ce que** le support de joint (50) est couplé à l'élément de cadre de toit (44) à l'aide d'un bras oscillant de support de joint (52) par le biais de deux articulations (54, 56) et est couplé au montant principal (30) ou au bras oscillant principal (32) à l'aide d'un bras oscillant de support de joint (68) supplémentaire par le biais de deux articulations (66, 70) supplémentaires.

3. Toit escamotable pliable selon la revendication 2, **caractérisé en ce que** les articulations (54, 56, 66, 70) sont des articulations pivotantes ne permettant respectivement qu'une jonction articulée dans deux dimensions.

4. Toit escamotable pliable selon la revendication 3, **caractérisé en ce qu'**un axe de rotation (74, 76) d'au moins deux articulations (66, 70) se place respectivement pour l'essentiel dans le même plan qu'une courbe décrite lors du pivotement d'une articulation à quatre points formée à partir du montant principal (30) et du bras oscillant principal (32) en partant d'un point de l'axe de rotation (74, 76) associé des articulations (66, 70).

5. Toit escamotable pliable selon la revendication 3, **caractérisé en ce qu'**un axe de rotation (60, 74, 76) de trois articulations (56, 66, 70) se place respectivement pour l'essentiel dans le même plan qu'une courbe décrite lors du pivotement d'une articulation à quatre points formée à partir du montant principal (30) et du bras oscillant principal (32) en partant d'un point de l'axe de rotation (60, 74, 76) associé des articulations (56, 66, 70).

6. Toit escamotable pliable selon l'une quelconque des revendications 3 à 5, **caractérisé en ce que** les deux articulations (66, 70) connexes par rapport au palier de roulement principal (38) comportent pour l'essentiel des axes de rotation parallèles.

7. Toit escamotable pliable selon la revendication 6, **caractérisé en ce que** l'articulation (54) reliant un des bras oscillants de support de joint (52) à l'élément de cadre de toit (44) comporte un axe de rotation (58) pour l'essentiel perpendiculaire aux axes de rotation (74, 76) pour l'essentiel parallèles.

8. Toit escamotable pliable selon la revendication 6, **caractérisé en ce que** l'articulation (56) davantage éloignée du palier de roulement principal (38) parmi les articulations (56, 66) reliant le support de joint (50) aux bras oscillants de support de joint (52, 68) comporte un axe de rotation (60) présentant au maximum un angle de 55° par rapport aux axes de rotation (74, 76) pour l'essentiel parallèles.

9. Toit escamotable pliable selon l'une quelconque des revendications 3 à 8, **caractérisé en ce qu'**au moins les axes de rotation (74, 76) des deux articulations (66, 70) connexes par rapport au palier de roulement principal (38) sont pour l'essentiel parallèles au montant principal (30) ou au bras oscillant principal (32).

10. Toit escamotable pliable selon l'une quelconque des revendications 2 à 9, **caractérisé en ce qu'**un mouvement de pivotement du support de joint (50) est rendu possible dans une direction transversale du toit escamotable pliable par une (56) des articulations (54, 56) du bras oscillant de support de joint (52) davantage éloigné du palier de roulement principal (38).

11. Véhicule automobile doté d'un toit escamotable pliable selon l'une quelconque des revendications précédentes.
